Europäisches Patentamt

(19) European Patent Office

Office européen des brevets

(11) Veröffentlichungsnummer: **0 059 240**
**A2**

(12) # EUROPÄISCHE PATENTANMELDUNG

(21) Anmeldenummer: 81108443.3

(22) Anmeldetag: 16.10.81

(51) Int. Cl.³: **G 06 K 9/32**

(30) Priorität: 27.02.81 DE 3107521

(43) Veröffentlichungstag der Anmeldung:
08.09.82 Patentblatt 82/36

(84) Benannte Vertragsstaaten:
CH FR GB IT LI NL SE

(71) Anmelder: SIEMENS AKTIENGESELLSCHAFT Berlin
und München
Postfach 22 02 61
D-8000 München 22(DE)

(72) Erfinder: Scherl, Wolfgang, Dipl.-Ing.
Kafkastrasse 54
D-8000 München 83(DE)

(72) Erfinder: Abele, Ludwig, Dipl.-Ing.
Lindenberg 17
D-8134 Pöcking(DE)

(72) Erfinder: Wahl, Friedrich, Dr. Dipl.-Ing.
5879 Herma St.
San Jose, Ca. 95123(US)

(72) Erfinder: Fuchsberger, Hermann
Schraudolphstrasse 13 a
D-8000 München 70(DE)

(54) Verfahren zum automatischen Erkennen von Bild- und Text- oder Graphikbereichen auf Druckvorlagen.

(57) Eine beliebige, auf Textinhalt zu untersuchende Druckvorlage wird optoelektronisch durch ein Videosystem abgetastet; die gewonnenen Abtastwerte werden digitalisiert und abgespeichert; innerhalb eines Speichers wird die eingelesene Vorlage in kleine, sich überlappende "Fenster" unterteilt; für jedes "Fenster" werden mehrere Lauflängenhistogramme durch einen Rechner erstellt; aus den Charakteristika dieser Histogramme wird jeweils abgeleitet, ob sie einen Text- oder Graphikbereich oder einen Bildbereich repräsentieren.

FIG 1

EP 0 059 240 A2

SIEMENS AKTIENGESELLSCHAFT

Berlin und München

0059240

Unser Zeichen

VPA 81 P 8005 E

Verfahren zum automatischen Erkennen von Bild- und Text-
oder Graphikbereichen auf Druckvorlagen.

Die vorliegende Erfindung betrifft ein Verfahren zum automatischen Erkennen von Bild- und Text- oder Graphikbereichen auf Druckvorlagen.

In einem typischen Büro werden Schriftstücke erstellt,
modifiziert und abgespeichert. Um diese Aufgaben möglichst
wirtschaftlich lösen zu können, wurden Textbearbeitungsautomaten entwickelt, die auf einfachem Wege Fehlerkorrekturen, Einfügungen neuer Textteile, Zusammensetzungen von
Texten mit unterschiedlichem Ursprung, beliebige Wiedergabe und eine elektronische Speicherung der die Textteile
repräsentierenden Daten ermöglichen. Der Vorteil eines
derartigen Textbearbeitungsautomaten gegenüber einer herkömmlichen Schreibmaschine liegt in seiner Flexibilität
und Zeitersparnis beim Erstellen von Schriftstücken und
der dadurch bedingten höheren Effektivität.

Ein wichtiges Kriterium bei der Entscheidung für einen
Textbearbeitungsautomaten ist der Aufwand zum Speichern
und/oder Übertragen von bereits auf Papier bestehender
Information in und/oder auf den Textbearbeitungsautomaten.
Eine manuelle Übertragung großer Textmengen ist sehr aufwendig. Von Vorteil wäre eine automatische Übertragung.

Eine Betrachtung von in Frage kommenden Vorlagen ergibt,
daß diese im wesentlichen aus Text-, Graphik- und/oder
Bildteilen bestehen. Um eine optimale Codierung der diese
Vorlagenteile repräsentierenden Daten sowie eine getrennte
Manipulation dieser genannten Komponenten erreichen zu
können, muß ein Verfahren und eine Vorrichtung zur Durch-

Pap 1 Wi / 26.02.1981 führung des Verfahrens geschaffen werden, die in der Lage sind, die Komponenten automatisch zu trennen und als solche zu klassifizieren.

Der vorliegenden Erfindung liegt die Aufgabe zugrunde, ein Verfahren und eine Vorrichtung zur Durchführung des Verfahrens anzugeben, mittels derer die obengenannten Vorgänge auf einfache, schnelle und zuverlässige Art und Weise ausgeführt werden können.

Die genannte Aufgabe wird durch ein Verfahren nach dem Oberbegriff des Hauptanspruchs gelöst, das durch die im kennzeichnenden Teil des Hauptanspruchs angegebenen Merkmale charakterisiert ist.

Die Erfindung bietet den Vorteil, daß ein verhältnismäßig einfaches Verfahren, das demzufolge auch - insbesondere durch die Verfügbarkeit preisgünstiger und raumsparender Datenverarbeitungs-Hilfsmittel, wie beispielsweise Mikrocomputer - eine verhältnismäßig einfache Anordnung zur Durchführung dieses Verfahrens voraussetzt, geschaffen wird, mittels dessen die genannte Aufgabe gelöst werden kann.

Weiterbildungen der Erfindung sind durch die in den Unteransprüchen angegebenen Merkmale gekennzeichnet.

Im folgenden wird die Erfindung an Hand mehrerer, Ausführungsbeispiele für die Erfindung betreffender Figuren im einzelnen erläutert.

Fig. 1 zeigt schematisch das Blockschaltbild einer Anordnung zur Durchführung des erfindungsgemäßen Verfahrens mit der abzutastenden Druckvorlage D, einem Video-Abtaster V, einem Analog/Digital-Wandler A/D, einem Speicher S und einem Rechner R.

Fig. 2 zeigt ein typisches Lauflängenhistogramm für Text betreffend horizontale weiße Lauflängen.

Fig. 3 zeigt ein typisches Lauflängenhistogramm für Text betreffend vertikale weiße Lauflängen.

Fig. 4 zeigt ein typisches Lauflängenhistogramm für Text betreffend horizontale schwarze Lauflängen.

Fig. 5 zeigt ein typisches Lauflängenhistogramm für Text betreffend vertikale schwarze Lauflängen.

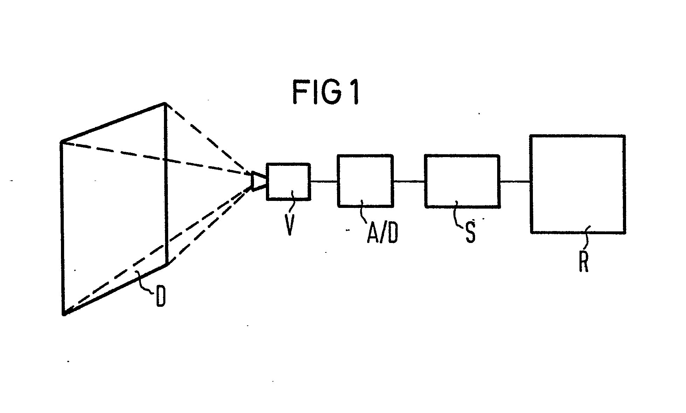

Wie bereits erläutert, zeigt Fig. 1 schematisch das Blockschaltbild einer Anordnung zur Durchführung des erfindungsgemäßen Verfahrens. Mit dieser Anordnung, die lediglich ein bevorzugtes Ausführungsbeispiel für eine derartige Anordnung darstellt, wird jeweils eine Seite der Druckvorlage D über ein geeignetes Videosystem, nämlich in diesem Ausführungsbeispiel einen Video-Abtaster V, abgetastet. Die Ausgangssignale dieses Video-Abtasters V werden einem Analog/Digital-Wandler A/D zugeführt. Die Signalausgänge dieses Analog/Digital-Wandlers A/D sind mit Signaleingängen eines vorzugsweise als Halbleiterspeicher ausgeführten Speichers S verbunden. Zu diesem Speicher hat ein Rechner R, der vorzugsweise als Mikrocomputer ausgeführt ist, Zugriff. Der Rechner R verarbeitet nach dem erfindungsgemäßen Verfahren die in dem Speicher S abgespeicherten Daten zum Ermitteln der Parameter der abgetasteten Druckvorlage D.

Dazu wird die Information der eingelesenen Druckvorlage D, die ein eine Vielzahl von Speicherzellen des Speichers S umfassendes Datenfeld darstellt, mit einem dieses Datenfeld abdeckenden Gitter von kleinen "Fenstern" überzogen, wobei das Gitter derart ausgelegt ist, daß sich die "Fenster" teilweise überlappen. Für jedes dieser "Fenster" werden statistische Parameter der betreffenden Teilinformation ermittelt und in einem weiteren Schritt zu einer Entscheidung herangezogen. Um sichere Aussagen machen zu können, muß die Kantenlänge der "Fenster" so ausgewählt werden, daß sie den Abstand zwischen zwei Textzeilen nicht unterschreitet.

Die in analoger Form entstehenden, die optoelektronische Abbildung der Vorlage repräsentierenden Signale werden mittels eines Entscheidungsvorganges jeweils entweder einer einen "Weißwert" repräsentierenden Binärzahl, vorzugsweise 1, oder einer einen "Schwarzwert" repräsentierenden Binärzahl, vorzugsweise 0, zugeordnet. Die derart gewonnenen Binärzahlen werden gespeichert. Zum Ermitteln der statistischen Parameter der abgetasteten Druckvorlage werden anschließend für jedes "Fenster" mittels des Rechners R vier unterschiedliche Lauflängenhistogramme erstellt, aus deren Charakteristika jeweils eine Aussage darüber ableitbar ist, ob das betreffende "Fenster" einen Text- bzw. Graphikausschnitt oder einen Bildausschnitt darstellt.

Die in analoger Form entstehenden, die optoelektronische Abbildung repräsentierenden Signale können gemäß einer Weiterbildung der Erfindung in einem Analogverfahren in "Weißwerte" und "Schwarzwerte" eingeteilt werden.

Eine besonders vorteilhafte Weiterbildung der Erfindung besteht darin, daß die in analoger Form entstehenden, die optoelektronische Abbildung repräsentierenden Signale in an sich bekannter Weise digitalisiert werden und daß die derart gewonnenen Digitalwerte mittels eines der an sich bekannten Verfahren, vorzugsweise durch Vergleich mit einem vorgegebenen digitalen Schwellwert, in "Weißwerte" und "Schwarzwerte" eingeteilt werden.

Vorteilhafterweise wird das Datenfeld mit einem Gitter von "Fenstern" überzogen, das derart ausgelegt ist, daß sich die "Fenster" teilweise überlappen.

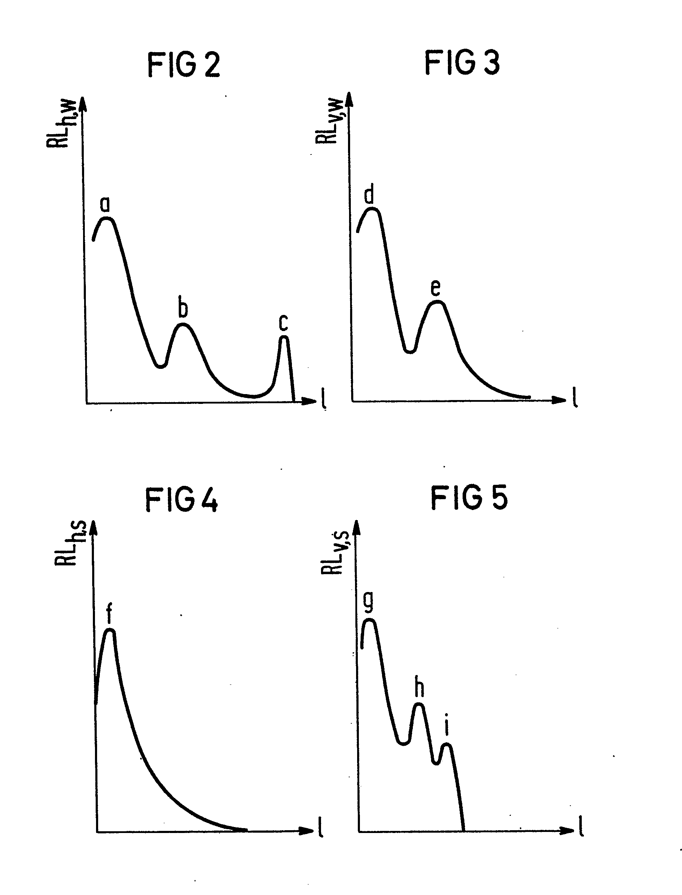

Die aus den Lauflängenhistogrammen ableitbaren Charakteristika werden nun dazu verwendet, Bewertungsmerkmale abzuleiten. Diese Bewertungsmerkmale werden einem Klassifizierungsvorgang zugeführt, bei dem eine Entscheidung darüber getroffen wird, ob der abgetastete Bereich der Vorlage ein Text- oder ein Bild- bzw. Graphikbereich ist. Eines dieser Bewertungsmerkmale wird aus den erstellten Lauflängenhistogrammen für die horizontalen Schwarzbereiche $RL_{h,s}$ (Fig.4) und für die vertikalen Schwarzbereiche $RL_{v,s}$ (Fig. 5) nach der Formel

$$S = \frac{\sum_{l=0}^{S_H} \left\{ \left[ (RL_{h,s}(l) + RL_{v,s}(l) \right] \cdot i \right\}^2}{\sum_{l=S_H+1}^{lmax} \left\{ \left[ (RL_{h,s}(l) + RL_{v,s}(l) \right] \cdot i^2 \right\}^2}$$

abgeleitet, wobei der Wert $S_H$ beispielsweise mit etwa 10 angenommen ist.

Ein weiteres Bewertungsmerkmal wird mittels eines erstellten Lauflängenhistogramms für horizontale Weißbereiche $RL_{h,w}$ (Fig. 2) und mittels eines Lauflängenhistogramms für vertikale Weißbereiche $RL_{v,w}$ (Fig. 3) nach der folgenden Formel abgeleitet:

$$RLD = \sum_{1}^{l_{max}} \frac{(RL_{h,w}(l) + RL_{v,w}(l))^2}{\sum_{1}^{lmax} (RL_{h,w}(l) + RL_{v,w}(l))} \quad \bullet$$

Anschließend wird geprüft, ob der in dem Lauflängenhistogramm für horizontale Weißbereiche $RL_{h,w}$ für die längste horizontale weiße Lauflänge, die der Länge des "Fensters" in horizontaler Richtung entspricht, einen Wert ungleich 0 aufweist. Die Prüfung, ob Text vorliegt, wird gemäß der

folgenden Bedingung durchgeführt.

$$(S > 2.0 \cdot 10^{-2}) \wedge (RLD > 12) \wedge (RL_{h,w} \ (lmax) \neq 0$$

Wenn diese Bedingung erfüllt ist, liegt tatsächlich ein Text vor.

In Fig. 2 (Lauflängenhistogramm für horizontale Weißbereiche) repräsentieren die Bereiche "a" den Raum innerhalb von Buchstaben, "b" die Wortzwischenräume und "c" größere Lauflängen in den Zeilenzwischenräumen.

In Fig. 3 (Lauflängenhistogramm für vertikale Weißbereiche) repräsentieren die Bereiche "d" Lauflängen innerhalb von Buchstaben und "e" die Zeilenzwischenräume.

In Fig. 4 (Lauflängenhistogramm für horizontale Schwarzbereiche) repräsentiert der Bereich "f" die Strichdicken.

In Fig. 5 (Lauflängenhistogramm für vertikale Schwarzbereiche) repräsentieren die Bereiche "g" die Strichdicken, "h" die Größen der Kleinbuchstaben und "i" die Großbuchstaben.

Die angegebenen Zahlenwerte sind beispielhaft genannt. Sie hängen von verschiedenen Parametern, beispielsweise der Wahl von $S_{\overline{H}}$, ab.

10 Patentansprüche
5 Figuren

<u>Patentansprüche</u>

1. Verfahren zum automatischen Erkennen von Bild- und Text- oder Graphikbereichen auf Druckvorlagen, bei dem eine optoelektronische Abtastung der betreffenden Druckvorlage vorgesehen ist, d a d u r c h   g e k e n n - z e i c h n e t ,   daß die in analoger Form entstehenden, die optoelektronische Abbildung der Vorlage repräsentierenden Signale mittels eines Entscheidungsvorganges jeweils entweder einer einen "Weißwert" repräsentierenden Binärzahl, vorzugsweise 1, oder einer einen "Schwarzwert" repräsentierenden Binärzahl, vorzugsweise 0, zugeordnet werden, daß die derart gewonnene Binärzahlen gespeichert werden, daß innerhalb eines Speichers (S) das für die eingelesene Vorlage betreffende Datenfeld in "Fenster" unterteilt wird, deren Kantenlängen derart festgelegt sind, daß sie den Abstand zwischen zwei Textzeilen nicht unterschreiten, und daß zum Ermitteln der statistischen Parameter der abgetasteten Druckvorlage für jedes "Fenster" mittels eines Rechners (R) vier unterschiedliche Lauflängenhistogramme erstellt werden, aus deren Charakteristika jeweils eine Aussage darüber ableitbar ist, ob das betreffende "Fenster" einen Text- bzw. Graphikausschnitt oder einen Bildausschnitt darstellt.

2. Verfahren nach Anspruch 1, d a d u r c h   g e - k e n n z e i c h n e t ,   daß die in analoger Form entstehenden, die optoelektronischen Abbildung repräsentierenden Signale in einem Analogverfahren in "Weißwerte" und "Schwarzwerte" eingeteilt werden.

3. Verfahren nach Anspruch 1, d a d u r c h   g e - k e n n z e i c h n e t ,   daß die in analoger Form entstehenden, die optoelektronische Abbildung repräsentierenden Signale in an sich bekannter Weise digitalisiert werden und daß die derart gewonnenen Digitalwerte mittels eines der an sich bekannten Verfahren, vorzugsweise durch Vergleich mit einem vorgegebenen digitalen Schwellwert, in "Weißwerte" und "Schwarzwerte" eingeteilt werden.

4. Verfahren nach Anspruch 1, d a d u r c h  g e k e n n - z e i c h n e t , daß das Datenfeld mit einem Gitter von "Fenstern" überzogen wird, das derart ausgelegt ist, daß sich die "Fenster" teilweise überlappen.

5. Verfahren nach Anspruch 1, d a d u r c h  g e k e n n - z e i c h n e t , daß die aus den Lauflängenhistogrammen ableitbaren Charakteristika dazu verwendet werden, Bewertungsmerkmale abzuleiten, und daß diese Bewertungsmerkmale einem Klassifizierungsvorgang zugeführt werden, der eine Entscheidung darüber, ob der abgetastete Bereich der Vorlage ein Text- oder ein Bild- bzw. Graphikbereich ist, herbeiführt.

6. Verfahren nach einem der vorhergehenden Ansprüche, d a d u r c h  g e k e n n z e i c h n e t , daß ein Bewertungsmerkmal mittels eines erstellten Lauflängenhistogramms für horizontale Schwarzbereiche ($RL_{h,s}$) und eines Lauflängenhistogramms für vertikale Schwarzbereiche ($RL_{v,s}$) nach der Formel

$$S = \frac{\sum_{l=0}^{S_H} \left\{ \left[ RL_{h,s}(l) + RL_{v,s}(l) \right] \cdot i \right\}^2}{\sum_{l=S_H+1}^{l\ max} \left\{ \left[ RL_{h,s}(l) + RL_{v,s}(l) \right] \cdot i^2 \right\}^2}$$

abgeleitet wird, wobei der Wert $S_H$ beispielsweise mit etwa 10 angenommen ist.

7. Verfahren nach einem der Ansprüche 1 bis 5, d a - d u r c h  g e k e n n z e i c h n e t , daß ein Bewertungsmerkmal mittels eines erstellten Lauflängenhistogramms für horizontale Weißbereiche ($RL_{h,w}$) und mittels eines Lauflängenhistogramms für vertikale Weißbereiche ($RL_{v,w}$)

nach der folgenden Formel abgeleitet wird:

$$RLD = \sum_{1}^{l_{max}} \frac{\left\{\left[RL_{h,w}(l) + RL_{v,w}(l)\right] \cdot i\right\}^2}{\sum_{1}^{lmax}\left[RL_{h,w}(l) + RL_{v,w}(l)\right]}$$

8. Verfahren nach einem der Ansprüche 1 bis 5, d a - d u r c h g e k e n n z e i c h n e t , daß geprüft wird, ob der in dem Lauflängenhistogramm für horizontale Weißbereiche ($RL_{h,w}$) für die längste horizontale weiße Lauflänge, (lmax) die der Länge des "Fensters" in horizontaler Richtung entspricht, einen Wert ungleich Null aufweist.

9. Verfahren nach einem der vorhergehenden Ansprüche, d a d u r c h g e k e n n z e i c h n e t , daß eine Prüfung daraufhin vorgenommen wird, ob Text vorliegt, und daß die Entscheidung darüber gemäß der Bedingung

$$S > 2.0 \cdot 10^{-2} \wedge RLD > 12 \wedge RL_{h,w}(lmax) \neq 0$$

getroffen wird.

10. Anordnung zur Durchführung des Verfahrens nach einem der vorhergehenden Ansprüche, d a d u r c h g e - k e n n z e i c h n e t , daß als Abtastorgan zum Abtasten der Druckvorlage (D) ein an sich bekannter Video-Abtaster (V) vorgesehen ist, dessen Ausgangssignale einem Analog/Digital-Wandler (A/D) zuführbar sind, daß die Signalausgänge dieses Analog/Digital-Wandlers (A/D) mit den Signaleingängen eines Halbleiterspeichers (S) verbunden sind und daß ein Rechner (R), vorzugsweise ein Mikrocomputer, vorgesehen ist, der die abgespeicherten Daten zum Ermitteln der Parameter der abgetasteten Druckvorlage (D) verarbeitet.

FIG 1

FIG 2

FIG 3

FIG 4

FIG 5